(19) Europäisches Patentamt
European Patent Office
Office européen des brevets

(11) **EP 2 618 023 A2**

(12) **EUROPEAN PATENT APPLICATION**
published in accordance with Art. 153(4) EPC

(43) Date of publication:
24.07.2013 Bulletin 2013/30

(51) Int Cl.:
*F16H 3/44* *(2006.01)*

(21) Application number: 11825386.3

(22) Date of filing: 09.09.2011

(86) International application number:
PCT/KR2011/006696

(87) International publication number:
WO 2012/036426 (22.03.2012 Gazette 2012/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 06.09.2011 KR 20110090272
14.09.2010 KR 20100089883

(71) Applicant: Hycore Co., Ltd.
Seoul 133-791 (KR)

(72) Inventors:
• CHOI, Young Jin
Ansan-si
Gyeonggi-do 426-789 (KR)
• LEE, Ho Yul
Ansan-si
Gyeonggi-do 426-170 (KR)

(74) Representative: von Kreisler Selting Werner
Deichmannhaus am Dom
Bahnhofsvorplatz 1
50667 Köln (DE)

(54) **EPICYCLIC GEAR SYSTEM USING TWO INPUT CHARACTERISTICS, GEAR MODULE INCLUDING SAME, AND METHOD FOR CONTROLLING SAME**

(57) Disclosed are a planetary gear system using tow input characteristics, a gear module thereof, and a method for controlling the same, which exhibit an effect of the gear shift using two motor characteristics, and also a gear module thereof, and a method for controlling the same. A gear system including a first gear unit; a second gear unit that rotates to mesh with the first gear unit; a third gear unit that rotates to mesh with at least one of the first gear unit and the second gear unit; and a driving source that generates a driving force. Two gear units of the first to third gear units serve as input parts to which driving forces from the driving source are transmitted, respectively, and the rest one gear unit serves as an output part from which a resultant force obtained by combining the driving forces is output.

FIG. 1

**Description**

**[Technical Field]**

Disclosed herein are a planetary gear system using tow input characteristic, a gear module thereof, and a method for controlling the same. More particularly, disclosed are a planetary gear system using tow input characteristics, a gear module thereof, and a method for controlling the same, which exhibit an effect of the gear shift using two motor characteristics, and also a gear module thereof, and a method for controlling the same.

**[Background Art]**

In general, when a robot and a machine system are designed, it is important to select a reduction gear ratio and a motor for driving them. That is, in order to operate the robot and the machine system, it is required that maximum speed and maximum torque are selected, and a motor satisfying them is selected. Unfortunately, in most machine systems, driving (high torque) at a high load (weight) is performed at low speed, and driving (low torque) at a small load (weight) is performed at high speed. For example, a robotic arm having similar functions to the human arm drives its joints at high speed in a dancing operation (when lifting a heavy object) and drives its joints at low speed in an operation of moving the heavy object.

In such a case, the same is true of vehicle running. When accelerating at a stopped state or cycling uphill, since high torque is needed, the running is performed using a high reduction gear at low speed, whereas when running at an accelerated state or running at a flatland, the running is performed using a low reduction gear at high speed.

For this reason, an actuator for driving the robot and the machine system needs to perform a high speed-low torque motion and a low speed-high torque motion. When an actuator capable of generating low torque is used at high speed, such driving requirements are all satisfied, and a motor of high capacity is need instead. The motor of high capacity causes an increase in weight and size of the system. Further, it is difficult to manufacture the system to have a small size.

Therefore, in the vehicle, when a rotation force of an engine is transmitted to a running wheel, a gearshift system is used to satisfy high speed-low torque and low speed-high torque characteristics. Furthermore, by using the gearshift system, since the driving is possible at the number of rotations of an energy-effective engine, it is possible to obtain its high efficiency.

Disadvantageously, in the robot required to frequently change a driving direction and a driving speed, it is difficult to use a gearshift system using a mechanical gear shift.

Accordingly, it is necessary to apply such a gearshift system to the small robot and the machine system driven by a motor, so that maximum driving torque and maximum driving speed of the robot can be improved, and it is possible to effectively drive in terms of energy.

**[Disclosure]**

**[Technical Problem]**

In accordance with an embodiment of the present invention, there are provided a planetary gear system using tow input characteristic, a gear module thereof, and a method for controlling the same, which output a resultant force of driving forces input from two driving units having different characteristics from each other.

Further, there are provided a planetary gear system using tow input characteristic, a gear module thereof, and a method for controlling the same, capable of generating a high speed-low torque output or a low speed-high torque output as necessary by combining two input characteristics.

Furthermore, there are provided a planetary gear system using tow input characteristic, a gear module thereof, and a method for controlling the same, capable of effectively applying to a small system by using a small motor, and capable of facilitating modularization for realizing cost reduction and mass production.

**[Technical Solution]**

In accordance with an embodiment of the present invention, there is provided a gear system including a first gear unit; a second gear unit that rotates to mesh with the first gear unit; a third gear unit that rotates to mesh with at least one of the first gear unit and the second gear unit; and a driving source that generates a driving force. Two gear units of the first to third gear units serve as input parts to which driving forces from the driving source are transmitted, respectively, and the rest one gear unit serves as an output part from which a resultant force obtained by combining the driving forces is output

In accordance with an embodiment of the present invention, there is provided a gear module including a first gear unit to which a first driving force is transmitted; a second gear unit to which a second driving force is transmitted; and a third gear unit that rotates to mesh with at least one of the first gear unit and the second gear unit; wherein a resultant force of the driving forces input to the first gear unit and the second gear unit is output through the third gear unit.

In accordance with an embodiment of the present invention, there is provided a transportation apparatus including a gear module that includes a first gear unit to which a first driving force is transmitted, a second gear unit to which a second driving force is transmitted, and a third gear which rotates to mesh with at least one of the first gear unit and the second gear unit and from which a resultant force of the driving forces input to the first gear unit and the second gear unit is output; and a control unit that selectively controls the first driving force transmitted to the first gear unit or the second driving force transmitted to the second gear unit to control the driving force output to the third gear unit.

**[Effect of the Invention]**

In accordance with embodiments of the present invention, by outputting a resultant force of driving forces input from two driving units having different characteristics from each other, it is possible to provide outputs of various combinations of speed and torque as necessary. Accordingly, an effect of the gear shift can be obtained.

Further, by combining two input characteristics, it is possible to generate a high speed-low torque output or a low speed-high torque output as necessary, so that output characteristics can be freely changed even in a small robot.

Furthermore, it is possible to effectively apply to a small system by using a small motor, and it is possible to facilitate modularization for realizing cost reduction and mass production.

Moreover, it is possible to increase maximum speed and maximum torque for a size and weight of a used motor, and it is possible to control energy consumption, thereby improving energy efficiency.

**[Description of Drawings]**

FIG. 1 is a perspective view schematically illustrating a gear system in accordance with an embodiment of the present invention.

FIG. 2 is an exploded perspective view schematically illustrating the gear system shown in FIG. 1.

FIGS. 3 to 5 are diagrams schematically illustrating an input and output relation of a planetary gear system using two input characteristics.

FIGS. 6 and 7 are diagrams schematically illustrating a principle of combining forces in the gear system in accordance with the embodiment of the present invention.

FIG. 8 is a torque-speed graph combined according to an operation of the gear system.

FIG. 9 is a diagram schematically illustrating a state where a configuration for preventing back-driving is attached to one driving unit in accordance with a second embodiment of the present invention.

FIG. 10 is a diagram schematically illustrating a state where a flywheel for preventing back-driving is attached to one driving unit of a gear system in accordance with a third embodiment of the present invention.

FIG. 11 is a diagram illustrating a state where one driving source for inputting a driving force as a manual input is applied to a gear system in accordance with a fourth embodiment of the present invention.

FIG. 12 is a diagram illustrating a state where a differential gear is applied to a gear system in accordance with a fifth embodiment of the present invention.

**[Best Mode]**

Hereinafter, embodiments of the present invention will be described in detail with reference to the accompanying drawings.

A gear system 100 in accordance with a first embodiment of the present invention is a system that generates various outputs by combining characteristics of two different driving units from each other. Such a gear system 100 may be used in various fields required to change an output characteristic depending on situations. That is, it is possible to freely change a high speed-low torque output or a low speed-high torque output.

The gear system 100 in accordance with the first embodiment of the present invention includes a first gear unit 110, a second gear unit 120, and a third gear unit 130. In particular, among them, two gear units serve as input parts to which driving forces are input, and the rest one gear unit serves as an output part from which a resultant force of the driving forces is output.

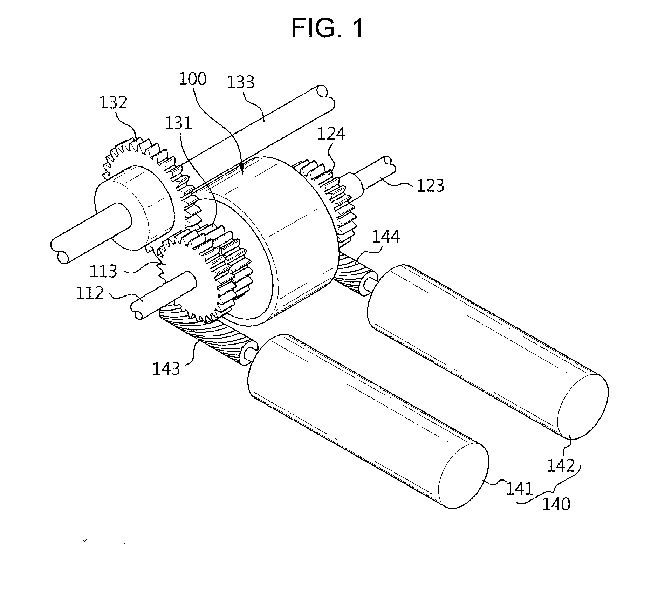

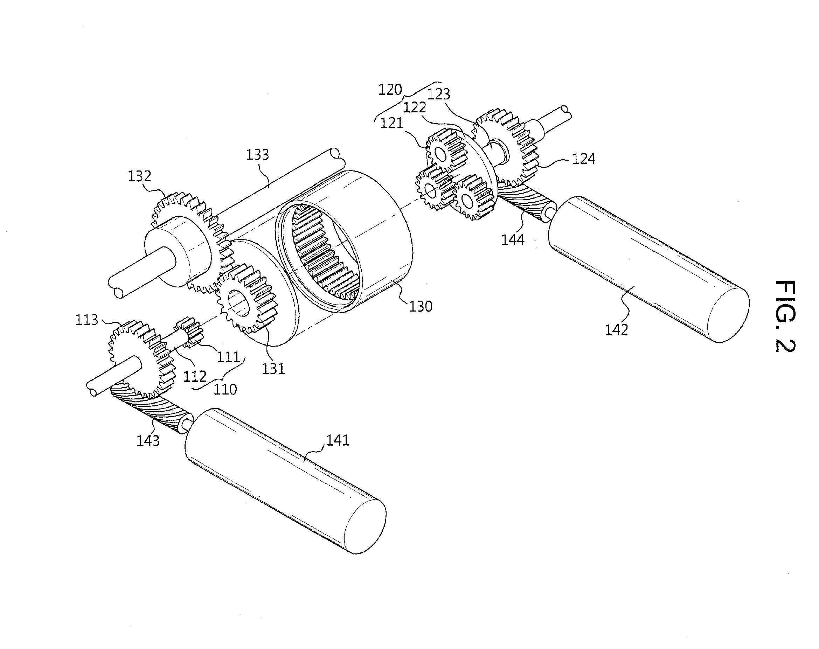

The detailed description thereof will be given with reference to FIGS. 1 and 2. FIG. 1 is a perspective view schematically illustrating the gear system in accordance with the first embodiment of the present invention, and FIG. 2 is an exploded perspective view schematically illustrating the gear system shown in FIG. 1.

The first gear unit 110 and the second gear unit 120 are disposed to rotate to mesh with each other. Then, the third gear unit 130 rotates to mesh with at least one of the first gear unit 110 and the second gear unit 120.

In the following embodiments, the first, second, and third gear units 110, 120, and 130 serve as, for example, a sun gear of a planetary gear, the planetary gear connected to a carrier, and a ring gear, respectively. That is, the gear system 100 in accordance with the first embodiment of the present invention uses, for example, a planetary gear unit including the sun gear, the carrier, the planetary gear and the ring gear. However, any other types of gears may be used as long as two gear units serve as the input parts. Hereinafter, an example where the planetary gear unit is used will be described.

The first gear unit 110 includes a sun gear 111 and a sun gear shaft 112 connected to the sun gear 111 to transmit a driving force to the sun gear 111 or receive the driving force from the sun gear 111. The second gear unit 120 includes a carrier 122, at least one planetary gear 121 rotating while being mounted on one side of the carrier 122, and a carrier shaft 123 connected to the other side of the carrier 122 to transmit the driving force thereto.

The sun gear 111 is interposed between the planetary gears 121 to rotate to mesh with each other. Thus, the sun gear 111 generally has an opposite rotation direction to a rotation direction of the planetary gear 121. The second gear unit 120 allows the planetary gear 121 to rotate and revolve due to the rotation of the carrier 122.

The third gear unit 130 serves as the ring gear. The ring gear preferably includes an internal gear inside a ring shape. The third gear unit 130 serving as the ring gear is disposed at an outside of the planetary gear of the second gear unit 120 to mesh with the planetary gear. Thus, the third gear unit 130 rotates by the rotation of the second gear unit 120.

By meshing with each other, the rotations of the respective gear units are influenced each other, and input forces are combined to be output.

At this time, two gear units of the first, second and third gear units 110, 120 and 130 serve as the input parts. That is, the two gear units receive driving forces from a driving unit.

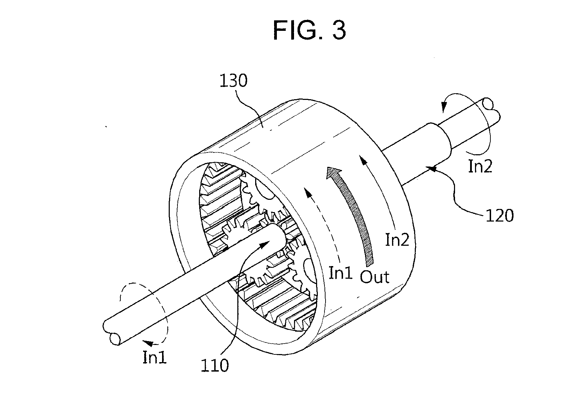

The detailed description thereof will be made with reference to FIGS. 3 to 5. FIGS. 3 to 5 are perspective views schematically illustrating an input and output relation of the planetary gear system using two input characteristics.

Referring to FIG. 3, the first gear unit 110 and the second gear unit 120 serve as the input units, and the driving forces are input (Inl and In2) through the two gear units 110 and 120. A resultant force of the input driving forces is output (Out) through the third gear unit 130. Thus, various outputs can be generated through the third gear unit 130 while controlling gear characteristics of the first gear unit 110 and the second gear unit 120 or characteristics of the driving forces transmitted to the gear units 110 and 120.

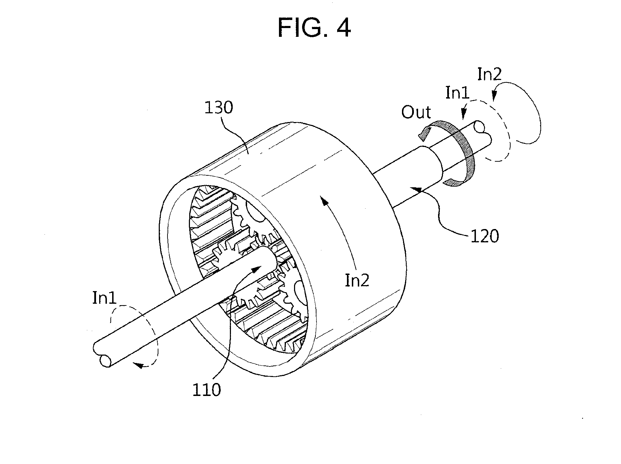

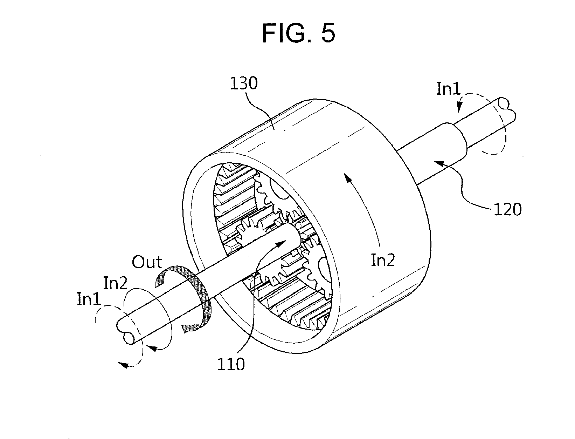

Referring to FIG. 4, the first gear unit 110 and the third gear unit 130 serve as the input parts to input (In1 and In2) the driving forces, and the second gear unit 120 serves as the output part to output (Out) the resultant force. Further, referring to FIG. 5, the second gear unit 120 and the third gear unit 130 serve as the input parts to input (In1 and In2) the driving forces, and the first gear unit 110 serves as the output part to output (Out) the resultant force. The gear units corresponding to the input parts and the output part may be changed depending on characteristics and a manufacturing method of a target to which the gear system is applied, and a principle of transmitting forces is the same as in the aforementioned description.

Hereinafter, an example where the first gear unit 110 including the sun gear 111 and the second gear unit 120 including the planetary gear 121 and the carrier 122 serve as the input parts, and the third gear unit 130 as the ring gear serves as the output part will be explained.

The first gear unit 110 and the second gear unit 120 preferably receive the driving forces from different driving sources 140 from each other. At this time, the driving source 140 includes a first driving unit 141 and a second driving unit 142. Examples of the driving source 140 may include various driving force-transmitting unit such as a motor, a pump, and a cylinder. In the following embodiments, an example where a motor is used will be described.

The first driving unit 141 inputs the driving force to the first gear unit 110. At this time, a first connection gear 113 rotates by the rotation of the first driving unit, and thus the sun gear shaft 112 rotates to allow the sun gear 111 to rotate.

Similarly, the second driving unit 142 inputs the driving force to the second gear unit 120 through a second connection gear 124.

The first driving unit 141 and the second driving unit 142 preferably have different outputs from each other. For example, the first driving unit 141 and the second driving unit 142 serving as motors preferably have different capacities from each other or different reduction ratios from each other.

More particularly, the first driving unit 141 may be set to have a characteristic (low speed-high torque) in which maximum driving speed is low while maximum driving torque is high. The second driving unit 142 may be set to have a characteristic (high speed-low torque) in which maximum driving speed is high while maximum driving torque is low. That is, the first driving unit 141 and the second driving unit 142 may be set to have reversely the characteristics to each other. Accordingly, by adjusting the characteristics of the driving forces, a characteristic of the resultant force output to the third gear unit 130 can be controlled.

Meanwhile, at least one of the first driving unit 141 and the second driving unit 142 input the driving forces through worm gears 143 and 144. The worm gears 143 and 144 are connected to the first connection gear 113 and the second connection gear 124, respectively. Through the worm gears, back-driving of the driving unit caused by interference between two inputs can be prevented. That is, when the two motors are used, the motor having a low reduction transmission ratio is back-driven by the driving of the motor having a high reduction transmission ratio. Thus, when a difference between the reduction transmission ratios of the two motors is high, by further providing the worm gears 143 and 144, it is possible to prevent the back-driving.

In addition, when the driving forces are transmitted as inputs, all general driving force-transmitting systems such as a spur gear, a bevel gear, and belt driving may be used.

The first gear unit 110 and the second gear unit 120 receive the driving forces from the first driving unit 141 and the second driving unit 142 to combine the driving forces, and the combined driving force is output through the third gear unit 130. A third connection gear 131 rotates by the rotation of the third gear unit 130, and an output gear 132 meshing therewith rotates, so that the driving force is output through an output shaft 133. Accordingly, it is possible to drive various robots and various machine systems connected to the output shaft 133.

Meanwhile, although not illustrated, in order to measure driving speeds and angles of the driving units, an encoder may be attached to the output shaft of each driving unit. Further, bearings may be provided between the gears and between the shafts, and a position of the planetary gear unit preferably is fixed while the rotation thereof is freely possible.

In accordance with an aspect, the gear system 100 is a gear module type including the first gear unit 100 to which a first driving force is transmitted, the second gear unit 120 to which a second driving force is transmitted, and the third gear unit 130 outputting the resultant force of the first driving force and the second driving force. At this time, the first driving force and the second driving force preferably have different output characteristics from each other.

Due to modularization, a size, weight, and manufacturing cost thereof can be reduced, and mass production thereof is possible. When necessary, the gear module may be connected to various driving units (motor and the like). Alternatively, it may be possible to integrally modularize with a motor having a certain gear ratio. The gear module may further include a worm gear to prevent back-driving of the driving unit connected thereto.

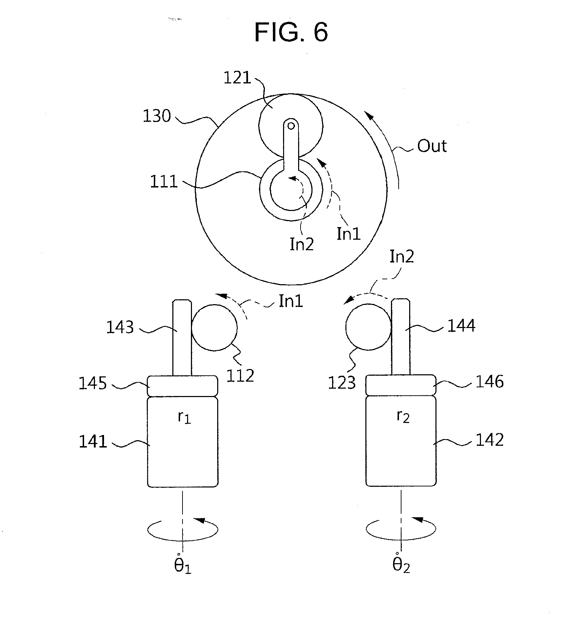

An operation and a control method of the planetary gear system 100 using two input characteristics and having the configuration described above will be described with reference to FIGS. 6 to 8.

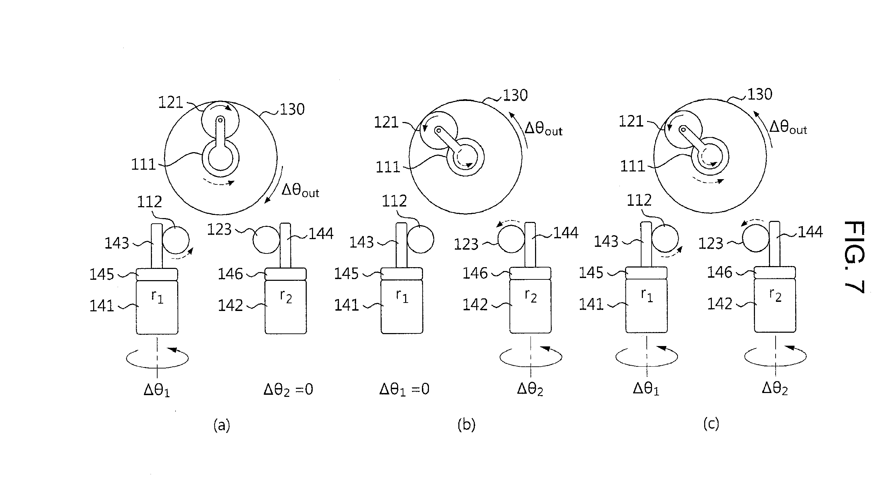

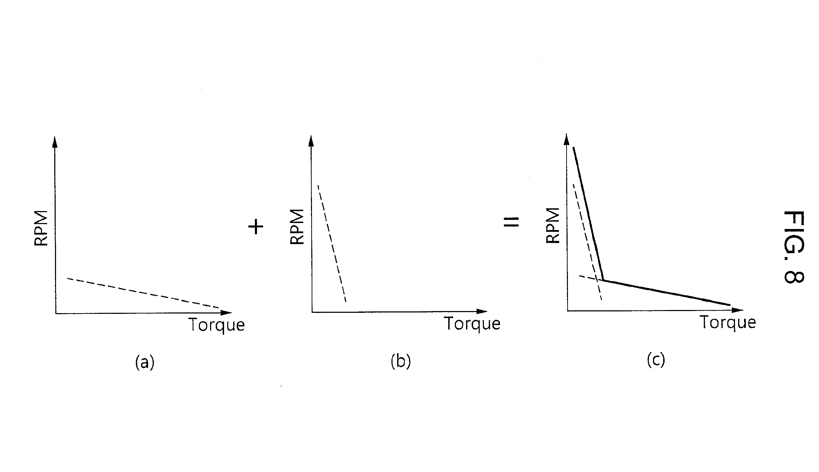

FIGS. 6 and 7 are schematic diagrams for describing a principle of combining forces of the gear system 100 in accordance with the first embodiment of the present invention, and FIG. 8 is a torque-speed graph combined according to the operation of the gear system 100.

Referring to FIG. 6, the first driving unit 141 and the second driving unit 142 have a first rotation angular speed $(\dot{\theta}_1)$ and a second rotation angular speed $(\dot{\theta}_2)$, and also have a first gear ratio ($r_1$) and a second gear ratio ($r_2$). At this time, the first driving unit 141 or the second driving unit 142 may further include a reduction gear 145 and 146.

The number of tooth of the sun gear 111 of the first gear unit 110 is given by $z_a$, and the number of tooth of the third gear unit 130 as the ring gear is given by $z_c$. At this time, when the rotation forces of the driving units 141 and 142 are transmitted to the gear units 110 and 120 serving as the input parts as inputs (In1 and In2), the gear ratio and the number of tooth are controlled to generate various output (Out) characteristics.

FIG. 7(a) shows schematically a state where only the first driving unit 141 is driven and the second driving unit 142 is stopped. Referring to this figure, the first driving unit 141 rotates at a certain angle $\Delta\theta_1$, and the second driving unit does not rotate. The sun gear 111 rotates in a certain direction by the rotation of the first driving unit 141, and thus the third gear unit 130 has a certain output angle $\Delta\theta_{out}$.

A minute output angle of the third gear unit 130 with respect to the rotation angle of the first driving unit 141 is as follows.

[Equation 1]

$$\Delta\theta_{out} = \frac{1}{r_1}\left(-\frac{z_a}{z_c}\right)\Delta\theta_1$$

The minute output angle of Equation 1 is converted into speed to obtain the following equation.

[Equation 2]

$$\dot{\theta}_{out} = R_1\dot{\theta}_1 \ , \ where \ R_1 = \frac{1}{r_1}\left(-\frac{z_a}{z_c}\right)$$

Accordingly, the output characteristic is determined based on the rotation angular speed of the first driving unit 141 and the number of tooth of the first and third gear units 110 and 130.

FIG. 7(b) shows schematically a state where only the second driving unit 142 is driven and the first driving unit 141 is stopped. Referring to this figure, the second driving unit 142 rotates at a certain angle $\Delta\theta_2$, and the first driving unit does not rotate. The planetary gear 121 rotates in a certain direction by the rotation of the second driving unit 142, and thus the third gear unit 130 has a certain output angle $\Delta\theta_{out}$.

A minute output angle of the third gear unit 130 with respect to the rotation angle of the second driving unit 142 is as in the following.

[Equation 3]

$$\Delta\theta_{out} = \frac{1}{r_2}\left(\frac{z_a}{z_c}+1\right)\Delta\theta_2$$

The minute output angle of Equation 3 is converted into speed to obtain the following equation.

[Equation 4]

$$\dot{\theta}_{out} = R_2\dot{\theta}_2 \ , \ where \ R_2 = \frac{1}{r_2}\left(\frac{z_a}{z_c}+1\right)$$

Accordingly, the output characteristic is determined based on the rotation angular speed of the second driving unit 142 and the number of tooth of the second and third gear units 120 and 130.

FIG. 7(c) shows a case where the first and second driving units 141 and 142 are all driven. In this case, an equation of an output speed with respect to inputs of the two driving units 141 and 142 is as follows.

[Equation 5]

$$\dot{\theta}_{out} = R_1\dot{\theta}_1 + R_2\dot{\theta}_2 , \ where \ R_1 = \frac{1}{r_1}\left(-\frac{z_a}{z_c}\right), R_2 = \frac{1}{r_2}\left(\frac{z_a}{z_c}+1\right)$$

By using Equation 5, the two motor characteristics are combined to obtain the output. Graphs obtained by combining the two motor characteristics can be seen from FIG. 8.

The graph (a) of FIG. 8 is a torque-speed graph of a motor having low maximum driving speed and high maximum driving torque due to a high reduction ratio characteristic. The graph (b) is a torque-speed of a motor having high maximum driving speed and low maximum driving torque due to a low reduction ratio characteristic.

In conclusion, when the first driving unit 141 has the high reduction ratio characteristic and the second driving unit 142 has the low reduction ratio characteristic, two inputs are combined to generate both a high speed-low torque output and a low speed-high torque output as shown in the graph (c).

That is, when one driving unit (for example, one motor) is used, any one characteristic of the high speed and the high torque as shown in the graph (a) or the graph (b) is exhibited. However, by combining the two different input characteristics from each other through the two driving units, it is possible to have both high speed and high torque. The graph (c) is similar to a characteristic graph of a two-speed gearshift when a gearshift is used as in a vehicle, and the gear system 100 in accordance with the present invention can obtain such a characteristic result by using only two small motors.

Since the general robot is driven at high speed (high speed-low torque) at a low load, and is driven at low speed (low speed-high torque) at a high load, the robot is mostly operated in a region shown in the graph (c). Thus, these characteristics are appropriately combined using only two small motors without using a complicated and large-scale gear system such as a gearshift system of a vehicle, or a motor of high capacity, so that an effect of gear shift is exhibited. As a result, it is possible to provide the gear system capable of being effectively applied to a small robot system.

In this way, the output characteristic obtained by combing the two input characteristics has various characteristics by the gear ratio and the number of tooth when the characteristics and the rotation forces of the driving units is transmitted to the input parts.

Further, by obtaining the effect and characteristic similar to those of the two-speed gearshift, the driving unit driven at an optimal (effective) speed depending on a load (or a driving torque) to reduce current consumption. That is, when the driving unit is driven at high torque, by driving only one driving unit having a high gear reduction effect (low speed-high torque), it is possible to use low current for driving torque through a control method in which the driving force is input through any one of the first gear unit 110 and the second gear unit 120. In addition, when a high speed is required, by driving only the driving unit having high speed-low torque characteristic or by driving both the two driving units, it is possible to provide an output having high speed through a control method in which the first gear unit 110 and the second gear unit 120 are simultaneously driven.

Meanwhile, when the gear system is operated at high speed-middle torque, that is, when the gear system is driven in a torque region smaller than maximum torque of the driving unit having high speed-low torque, it is preferable to control the two driving units to use the same current. Thus, the two driving units simultaneously generate the same torque. In this way, it is preferable in view of energy efficiency that the two driving units (motors) generate the same torque, and thus the same force is generated from the two motors so as to exhibit the same force in a possible range.

It is possible to prevent large current consumption caused by overload of a motor by using the control method described above.

The gear system 100 or the gear module may be applied to various small robots, apparatuses and systems. Further, the gear system 100 or the gear module may be applied to various fields required for a system rotating at various speeds or forces such as driving of a rotational wheel or driving of an arm.

Hereinafter, a gear system in accordance with a second embodiment of the present invention will be described in detail, and the description for the same components as those in the first embodiment will be omitted.

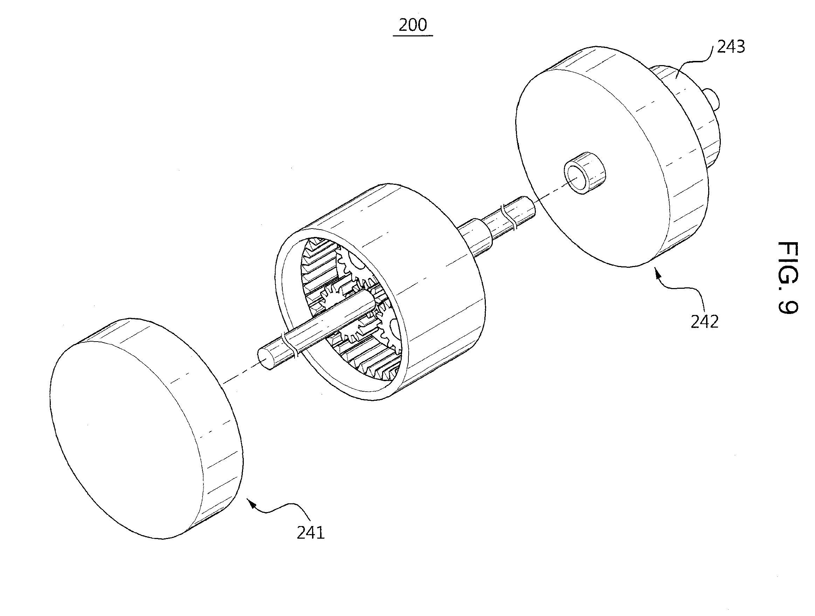

FIG. 9 is a schematic diagram illustrating a state where one driving unit of a gear system in accordance with a second embodiment of the present invention is provided with a configuration for preventing back-driving.

As shown in the figure, a gear system 200 of this embodiment is different from the gear system 100 (see FIG. 1) of the first embodiment in that the worm gears 143 and 144 (see FIG. 2) for preventing back-driving are not applied thereto while another configuration is applied thereto, and thus it is possible to further improve energy efficiency.

As described above, when a motor of a first driving unit 241 outputting high torque is driven to output high torque, a motor of a second driving unit 242 outputting relatively low torque may be back-driven, that is, the motor itself may rotate. As a result, a high torque characteristic may not be generated as an output.

Accordingly, in order to prevent such a situation, back current may be applied to the motor of the second driving unit 242 to suppress the back-driving, or a separate configuration may be attached to the motor of the second driving unit 242, as shown in FIG. 9.

Here, examples of a configuration 243 attached to the motor of the second driving unit 242 include, as a break type, an electromagnetic break and a mechanical break breaking by a mechanical operation, and also include, a bearing type, a one-way bearing and a clutch bearing.

Specifically, the electromagnetic break is a break to which a breaking manner using an electromagnetic force is applied, and the back-driving can be prevented by such an operation. The one-way bearing and the clutch bearing supply a rotation force in one direction and freely rotate in the other direction as in a general bearing. Thus, the one-way bearing is attached to a stationary portion (a portion where the rotation does not occur) and the second driving unit 242, so that the rotation force of the motor is transmitted to the planetary gear system 200 in one direction. When the second driving unit 242 is not driven and only the first driving unit 241 is driven, it is possible to prevent a reverse rotation (back-driving).

In this way, in the second embodiment of the present invention, the second driving unit 242 having a relatively low torque output is provided with a configuration 243 such as a separate break and a separate bearing, so that it is possible to prevent the back-driving, and it is possible to obtain excellent energy efficiency than other gears (general spur gears).

Hereinafter, a gear system in accordance with a third embodiment of the present invention will be explained in detail, and the description of the same components as those in the gear systems of the aforementioned embodiments will be omitted.

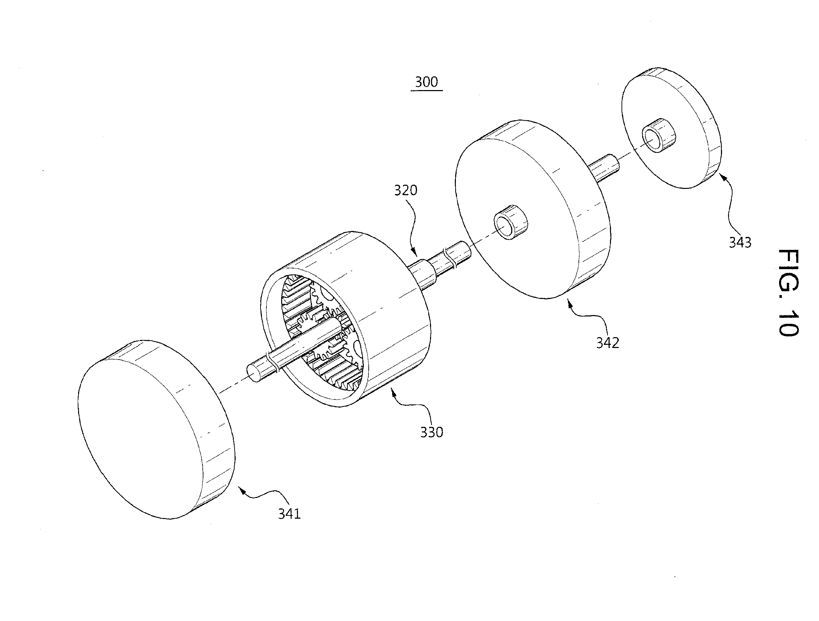

FIG. 10 is a schematic diagram illustrating a state where one driving unit of a gear system in accordance with a third embodiment of the present invention is provided with a flywheel for preventing the back-driving.

As shown in the figure, in a gear system 300 of this embodiment, a flywheel 343 having high rotational inertia is attached to a motor of a second driving unit 342. Since the flywheel 343 tends to maintain its current motion state, when the rotation of a motor of a first driving unit 341 having high torque is transmitted to a third gear unit 330 serving as the output part, it is possible to reduce or prevent a second gear unit 320 connected to a second driving unit 342 having low torque from back-driving. Thus, when the flywheel 343 is applied, by merely applying back current without a separate break, it is possible to prevent the back-driving.

The method of preventing the back-driving using the characteristic of the flywheel 343 will be further explained. Since the flywheel 343 usually has high rotation inertia, the flywheel is used for maintaining a rotation force of an engine in a vehicle, for example. Accordingly, when the flywheel is attached to a general motor system (a system in which a driving shaft is driven by one motor), inertia is further applied, so that a speed conversion characteristic of the motor may be degraded.

The motor system of this embodiment, that is, the gear system 300 generates one output using the two motors. Thus, the motor having an excellent deceleration characteristic, that is, the motor of the first driving unit 341 is used for impulsive acceleration and rapid speed change, and the motor having a low deceleration characteristic, that is, the motor of the second driving unit 342 is accelerated once, and then the entire output speed can be controlled using the speed change of the motor of the first driving unit 341 while maintaining at certain speed without rapidly changing its speed. Accordingly, it is possible to reduce energy loss caused by a rapid change in speed of the high speed motor generated during the high speed running.

In addition, since the gear system 300 of the present invention is a redundancy system which obtains one output from two inputs, by controlling the motors of the two driving units 341 and 342 at certain speed, it does not generate the final output. Specifically, when the motor of the second driving unit 342 provided with the flywheel 343 is accelerated, only the flywheel 343 is accelerated without causing load in an actual output, so that it is possible to easily accelerate the motor of the second driving unit 342 provided with the flywheel 343. Further, it is possible to reduce current consumption when the actual load is driven using the rotation force of the accelerated flywheel 343 compared to when the load is driven at a stopped state. In this way, energy efficiency is improved due to the reduced current consumption, and torque needed for accelerating at the stopped state is decreased, so that it is possible to apply the motor of small capacity.

Hereinafter, a gear system in accordance with a fourth embodiment of the present invention will be described in detail, and the description of the same components as those in the gear systems of the aforementioned embodiments will be omitted.

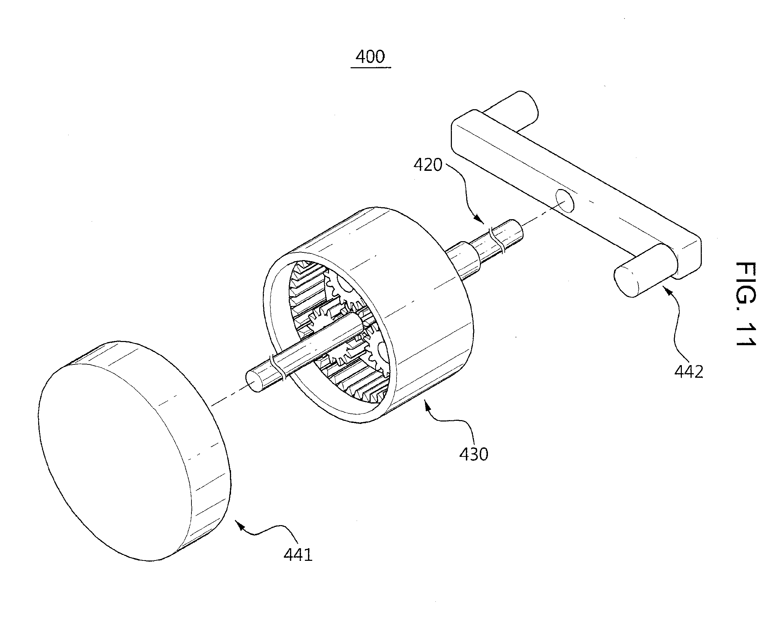

FIG. 11 is a diagram illustrating a state where one driving source inputs a driving force in a gear system in accordance with a fourth embodiment of the present invention in a manual manner.

As shown in the figure, in this embodiment, the driving unit is not coupled to a second gear unit 420, and a driving force manually applied by an operator is input to the second gear unit 420. For example, in a pedal structure of a bicycle, the driving force applied to the second gear unit 420 may be applied by a manual unit 442 such as a pedal of a bicycle.

In such a configuration, the output shaft may be driven by only a manual unit 442, and a third gear unit 430, that is, the output shaft may be driven by simultaneously using the motor of a first driving unit 441 and the manual unit 442.

Here, when the driving force is input by the manual unit 442, the motor of the first driving unit 441 rotates in a direction for rotating the output shaft in a reverse direction, so that a speed of the output shaft with respect to an actual manual input is reduced. As a result, it is possible to obtain a conversion effect of a gear ratio. Accordingly, it is possible to function such as an infinite gearshift within a certain region.

Hereinafter, a gear system in accordance with a fifth embodiment of the present invention will be described in detail, and the description of the same components as those in the gear system of the aforementioned embodiments will be omitted.

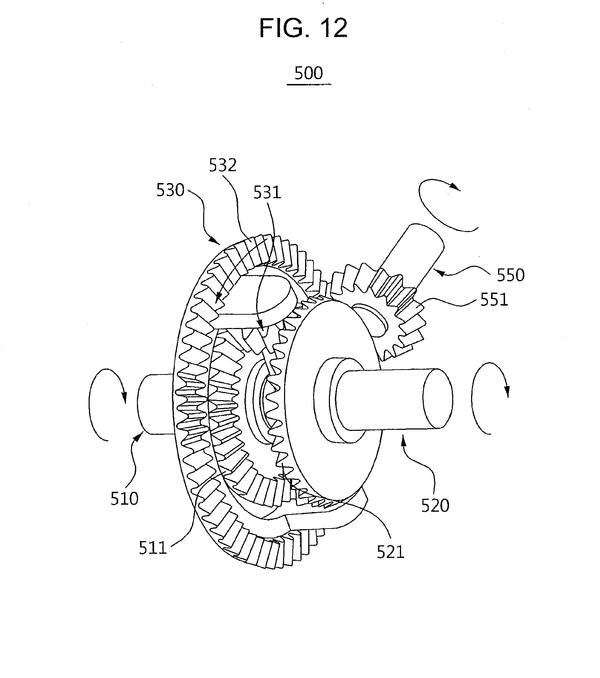

FIG. 12 is a diagram illustrating a state where a differential gear is applied to a gear system in accordance with a fifth embodiment of the present invention.

As shown in the figure, a gear system 500 of this embodiment is a differential gear system that generates an output through one gear unit from two inputs generated by two gear units. A first gear unit 510 and a second gear unit 520 include differential side gears 511 and 521, respectively, and a third gear unit 530 includes a ring gear 532 coupled to a pair of differential pinion gears 531 coupled between the differential side gears 511 and 521 of the first gear unit 510 and the second gear 520. Further, the ring gear 532 is coupled to mesh with a driving pinion gear 551 of a driving shaft 550, so that the driving shaft 550 is rotated through the rotation of the ring gear 532.

Here, the differential side gear 511 of the first gear unit 510 and the differential side gear 521 of the second gear unit 520 serve as the input parts receiving the driving forces from the driving source, and the third gear unit 530 serves as the output part that generates a resultant force of the driving forces as an output. However, the present invention is not limited thereto, but the three gear units 510, 520 and 530 may selectively serve as two input parts and one output part.

Similarly to the planetary gear system 100 (see FIG. 1) of the aforementioned first embodiment, since the differential gear system 500 includes three rotational shafts and one shaft provided therein, when two rotational shafts are used as inputs and one rotational shaft is used as an output, two inputs are combined to generate one output.

In this way, although the methods of combining two motor characteristics suggested in the aforementioned embodiments are applied to the planetary gear or the differential gear depending on a manufacturing method or the purpose of use, the present invention is not limited thereto but may be applied to all gear systems including three driving shafts and one shaft therein.

Meanwhile, the gear module described above, that is, the gear module which generates one output from two inputs, may be provided in a transportation apparatus. More specifically, the transportation apparatus may include a gear module having a first and second gear units to which different input characteristics from each other are transmitted and a third gear unit generating a resultant force thereof as an output; and a control unit for selectively controlling the driving forces transmitted to the first gear unit or the second gear unit to control the driving force output to the third gear unit.

The transportation apparatus may be an electric bicycle in which at least one gear unit is driven by electricity. In the electric bicycle, the first driving force input to the first gear unit may be a manual input which is controlled and input by a user, and the second driving force input to the second gear unit may be a driving force generated by a supply of electricity. Thus, the first gear unit or the second gear unit may be selectively driven depending on a place such as flatland or a hill, so that energy efficiency can be improved. When cycling uphill, it is preferable to use the second gear unit driven by a supply of electricity rather than the first gear unit driven by the manual input. At this time, the motor having the low speed-high torque characteristic may be used as the second gear unit.

The transportation apparatus to which the gear module is applied is not limited to the electric bicycle, but may be applied to other transportation apparatuses or transportation means. In addition, although it has been described that one gear unit of two gear units that inputs the driving force is used as the gear unit for the manual input and the other gear unit is used as the gear unit that inputs the driving force by a supply of electricity, the present invention is not limited thereto. The two gear units may be all used as the gear units driven by the manual input, or the two gear units may be used as the gear units that generate the driving force by a supply of electricity.

Meanwhile, the gear system described above, that is, the gear system in which the first gear unit and the second gear unit serve as the input parts receiving the driving forces from the driving source, and the third gear unit serves as the output part generating the resultant force obtained by combining the driving forces may be also provided in the transportation apparatus. Specifically, the transportation apparatus may include a gear system including such gear units; and a control unit for respectively controlling the driving forces transmitted to selected gear units of the gear units to control an output.

The transportation apparatus may be, for example, an electric bicycle in which at least one gear unit of the first gear unit and the second gear unit is driven by electricity. In the electric bicycle, the driving force input to the first gear unit may be a manual input which is controlled and input by a user, and the driving force input to the second gear unit may be a driving force generated by a supply of electricity. Thus, the first gear unit or the second gear unit may be selectively driven, so that energy efficiency can be improved. For example, when cycling uphill, the second gear unit driven by a supply of electricity rather than the first gear unit driven by the manual input may be used. At this time, the motor having the low speed-high torque characteristic may be used as the second gear unit.

Similarly, the transportation apparatus to which the gear system is applied is not limited to the electric bicycle, but may be applied to other transportation apparatuses. In addition, the driving forces input to the first gear unit and the second gear unit may be different manual inputs from each other, or may be all driving forces by a supply of electricity.

As described above, although the present invention has been described with reference to the limited embodiments and drawings, it is not to be restricted by the embodiments. It is to be appreciated that those skilled in the art can change or modify the embodiments without departing from the scope and spirit of the present invention.

Accordingly, the scope of the present invention is limited to the above-described embodiments, and can be deduced from the appended claims and equivalents interpreted from the claims.

**Claims**

1.  A gear system, comprising:

    a first gear unit;
    a second gear unit that rotates to mesh with the first gear unit;
    a third gear unit that rotates to mesh with at least one of the first gear unit and the second gear unit; and
    a driving source that generates a driving force,
    wherein two gear units of the first to third gear units serve as input parts to which driving forces from the driving source are transmitted, respectively, and the rest one gear unit serves as an output part from which a resultant force obtained by combining the driving forces is output.

2.  The gear system according to claim 1, wherein the driving source includes a first driving unit and a second driving unit that have different outputs from each other.

3.  The gear system according to claim 2, wherein the first driving unit and the second driving unit include motors, respectively, and the motors have different capacities from each other or different reduction ratios from each other.

4.  The gear system according to claim 3, wherein one of the motors has a low speed-high torque characteristic, the other has a high speed-low torque characteristic.

5.  The gear system according to claim 1,
    wherein the first gear unit includes a sun gear,
    the second gear unit includes a planetary gear and a carrier, and
    the third gear unit includes a ring gear, and
    wherein the sun gear and the carrier serve as the input parts, and the ring gear serves as the output part.

6.  The gear system according to claim 1,
    wherein the first gear unit includes a sun gear,
    the second gear unit includes a planetary gear and a carrier, and
    the third gear unit includes a ring gear, and
    wherein the sun gear and the ring gear serve as the input parts, and the carrier serves as the output part.

7.  The gear system according to claim 1,
    wherein the first gear unit includes a sun gear,
    the second gear unit includes a planetary gear and a carrier, and
    the third gear unit includes a ring gear, and
    wherein the ring gear and the carrier serve as the input parts, and the sun gear serves as the output part.

8.  The gear system according to claim 2, wherein at least one of the first driving unit and the second driving unit transmits the driving force through a worm gear to prevent back-driving.

9.  The gear system according to claim 2, wherein an electromagnetic break or a mechanical break is coupled to at least one of the first driving unit and the second driving unit to prevent back-driving.

10. The gear system according to claim 2, wherein a one-way bearing or a clutch bearing is coupled to at least one of the first driving unit and the second driving unit.

11. The gear system according to claim 2, wherein a flywheel having inertia is coupled to at least one of the first driving unit and the second driving unit.

12. The gear system according to claim 1, wherein the driving force is input to one of the first to third gear units by the driving source having a motor, and a driving force generated in a manual manner is input to another of the first to third gear units.

13. The gear system according to claim 1,
    wherein the first gear unit and the second gear unit includes corresponding differential side gears, respectively, and the third gear unit includes a ring gear coupled to a pair of differential pinion gears coupled between the differential side gears of the first gear unit and the second gear unit, and

wherein, among the differential side gear of the first gear unit, the differential side gear of the second gear unit and the ring gear of the third gear unit, two gear units serve as the input parts to which the driving forces from the driving source are transmitted, respectively, and the rest one gear unit serves as the output part from which a resultant force obtained by combining the driving forces is output as an output.

14. A gear module, comprising:

a first gear unit to which a first driving force is transmitted;

a second gear unit to which a second driving force is transmitted; and

a third gear unit that rotates to mesh with at least one of the first gear unit and the second gear unit;

wherein a resultant force of the driving forces input to the first gear unit and the second gear unit is output through the third gear unit.

15. The gear module according to claim 14, wherein the first driving force and the second driving force have different output characteristics from each other.

16. A method for controlling a planetary gear system using the two input characteristics according to claim 4, wherein, when the gear system performs driving at low speed and high torque, the motor having the low speed-high torque characteristic is driven.

17. A method for controlling a planetary gear system using the two input characteristics according to claim 4, wherein, when the gear system performs driving at high speed and low torque, the motor having the high speed-low torque characteristic is driven, or the motor having the low speed-high torque characteristic and the motor having the high speed-low torque characteristic are simultaneously driven.

18. A method for controlling a planetary gear system using the two input characteristics according to claim 4, wherein, when the gear system performs driving at low speed and high torque, the same current is supplied to the motor having the low speed-high torque characteristic and the motor having the high speed-low torque characteristic to generate the same torque.

19. A transportation apparatus, comprising:

a gear module that includes a first gear unit to which a first driving force is transmitted, a second gear unit to which a second driving force is transmitted, and a third gear which rotates to mesh with at least one of the first gear unit and the second gear unit and from which a resultant force of the driving forces input to the first gear unit and the second gear unit is output; and

a control unit that selectively controls the first driving force transmitted to the first gear unit or the second driving force transmitted to the second gear unit to control the driving force output to the third gear unit.

20. The transportation apparatus according to claim 19,

wherein the transportation apparatus is an electric bicycle driven by electricity,

the first driving force input to the first gear unit is a manual input, and

the second driving force input to the second gear unit is a driving force generated by a supply of electricity.

## FIG. 1

EP 2 618 023 A2

FIG. 2

13

FIG. 3

# FIG. 4

# FIG. 5

# FIG. 6

# FIG. 7

(a)

(b)

(c)

# FIG. 8

# FIG. 9

# FIG. 10

## FIG. 11

# FIG. 12

500